# EUROPÄISCHE PATENTSCHRIFT

(11) **EP 3 592 504 B1**
(45) Veröffentlichungstag und Bekanntmachung des Hinweises auf die Patenterteilung: **19.10.2022**
(21) Anmeldenummer: 18709252.3
(22) Anmeldetag: 27.02.2018
(51) Int. Cl.: B24B 5/18, B23Q 7/00, B23Q 7/06, B23Q 7/08, B24B 5/35

(54) **BELADUNGSEINRICHTUNG FÜR EINE EINSTECHSCHLEIFMASCHINE ZUM SPITZENLOSEN AUSSENRUNDSCHLEIFEN SOWIE VERFAHREN ZUM SPITZENLOSEN AUSSENRUNDSCHLEIFEN**
LOADING DEVICE FOR A PLUNGE CUT GRINDING MACHINE FOR CENTRELESS EXTERNAL CYLINDRICAL GRINDING AND METHOD FOR CENTRELESS EXTERNAL CYLINDRICAL GRINDING
DISPOSITIF DE CHARGEMENT POUR UNE MACHINE DE RECTIFICATION EN PLONGÉE DESTINÉE À LA RECTIFICATION CYLINDRIQUE EXTERNE SANS POINTE AINSI QUE PROCÉDÉ POUR LA RECTIFICATION CYLINDRIQUE EXTERNE SANS POINTE

(30) Priorität: 08.03.2017 DE 102017104807
(43) Veröffentlichungstag der Anmeldung: 15.01.2020
(73) Patentinhaber: Schaeffler Technologies AG & Co. KG, 91074 Herzogenaurach (DE)
(72) Erfinder: SEUBOLD, Daniel, 96257 Marktgraitz (DE)
(86) Internationale Anmeldenummer: PCT/DE2018/100171
(87) Internationale Veröffentlichungsnummer: WO 2018/162002

(56) Entgegenhaltungen:
- DE-A1- 3 320 062
- DE-C- 735 510

## Beschreibung

Die Erfindung betrifft eine Beladungseinrichtung für eine Einstechschleifmaschine zum spitzenlosen Außenrundschleifen sowie ein Verfahren zum spitzenlosen Außenrundschleifen, mit deren Hilfe ein Rohwerkstück durch spitzenloses Außenrundschleifen mit geometrisch unbestimmter Schneide zu einem Endwerkstück spanend bearbeitet werden kann.

Beim spitzenlosen Außenrundschleifen mit Hilfe einer Einstechschleifmaschine wird mit Hilfe eines in radialer Richtung angreifenden Greifers ein zu schleifendes Rohwerkstück in einen Schleifspalt zwischen einer Schleifscheibe und einer Regelscheibe, die jeweils ein Negativprofil des herzustellenden Werkstücks aufweisen, eingelegt. Das Rohwerkstück kann hierbei auf einer Halteschiene aufgelegt sein. Nach dem Schleifen kann der Greifer das fertige Endwerkstück greifen, aus dem Schleifspalt entnehmen, an einer dafür vorgesehenen Stelle ablegen und das nächste zu schleifende Rohwerkstück greifen und in den Schleifspalt einlegen. Es ist auch möglich das Endwerkstück mit Hilfe eines in axialer Richtung an dem Endwerkstück angreifenden Auswerfers aus dem Schleifspalt herauszudrücken.

Die DE 735 510 C , die die Basis für den Oberbegriff des Anspruchs 1 bildet, beschreibt eine Vorrichtung zum selbsttätigen Zu- und Abführen der Werkstücke bei spitzenlosen Schleifmaschinen mit einem das Werkstück U-förmig umfassenden Zubringer.

Die DE 33 20 062 A1 offenbart eine Schleifmaschine zum spitzenlosen Feinschleifender Stirnflächen von rotationssymmetrischen Werkstücken.

Es besteht ein ständiges Bedürfnis die Stückzahl von mit Hilfe einer Einstechschleifmaschine herstellbaren Werkstücken zu erhöhen.

Es ist die Aufgabe der Erfindung Maßnahmen aufzuzeigen, die eine hohe Stückzahl von mit Hilfe einer Einstechschleifmaschine herstellbaren Werkstücken ermöglichen.

Die Lösung der Aufgabe erfolgt erfindungsgemäß durch eine Beladungseinrichtung mit den Merkmalen des Anspruchs 1 sowie ein Verfahren mit den Merkmalen des Anspruchs 8. Bevorzugte Ausgestaltungen der Erfindung sind in den Unteransprüchen und der nachfolgenden Beschreibung angegeben.

Erfindungsgemäß ist eine Beladungseinrichtung für eine Einstechschleifmaschine zum spitzenlosen Außenrundschleifen vorgesehen mit einem Aufnahmerahmen zur Aufnahme eines zu bearbeitenden Rohwerkstücks, wobei der Aufnahmerahmen in Schwerkraftrichtung geöffnet ausgestaltet ist, einem Auflagekörper zur Ausbildung eines Auflagebodens für das in dem Aufnahmerahmen aufgenommene Rohwerkstück und einem an dem Aufnahmerahmen angreifenden Verlagerungsaktor zum axialen Verlagern des Aufnahmerahmens relativ zum Auflagekörper in einen Schleifspalt der Einstechschleifmaschine, wo der Aufnahmerahmen zu dem Auflagekörper versetzt positioniert ist, wobei der Aufnahmerahmen an einer in axialer Richtung weisenden Stirnseite einen Förderanschlag zum axialen Herausbefördern eines in dem Schleifspalt angeordneten Endwerkstücks aufweist, wobei der Aufnahmerahmen einen Positionieranschlag zum axialen Anschlagen an einer von dem Auflagekörper weg weisenden Axialseite des Rohwerkstücks aufweist und wobei der Aufnahmerahmen an einer zum Schleifspalt weisenden Axialseite eine Klappe aufweist, wobei die Klappe an der vom Schleifspalt weg weisenden Seite den Positionieranschlag aufweist.

Der Aufnahmerahmen kann als Kasten ohne Boden und ohne Decke ausgeführt sein, der das in den Aufnahmerahmen eingesetzte Rohwerkstück umgeben kann. Das Rohwerkstück kann von oben in den Aufnahmerahmen hereinbefördert werden, wobei ein schwerkraftbedingtes Herausfallen des Rohwerkstücks aus dem Aufnahmerahmen durch den Auflagekörper in der Ausgangsposition des Aufnahmerahmens blockiert werden kann. Der Auflagekörper bildet den Auflageboden für das in dem Aufnahmerahmen eingesetzte Rohwerkstück aus. Mit Hilfe des Verlagerungsaktors kann der Aufnahmerahmen relativ zum Auflagekörper in Richtung des Schleifspalts axial verlagert werden. Hierbei kann der Aufnahmerahmen mit dem Förderanschlag an dem fertigen Endwerkstück in dem Schleifspalt anschlagen und dadurch das Endwerkstück aus dem Schleifspalt herausbefördern. Wenn der Aufnahmerahmen im Wesentlichen vollständig im Bereich des Schleifspalts angekommen ist, kann das Rohwerkstück erforderlichenfalls schwerkraftbedingt aus dem Aufnahmerahmen in den Schleifspalt herunterfallen. Wenn das Rohwerkstück in dem Schleifspalt positioniert ist, kann der Aufnahmerahmen zurück auf den Auflagekörper in die vorherige Ausgangsposition zurückbewegt werden. Hierbei kann durch geeignete Maßnahmen sichergestellt werden, dass der Aufnahmerahmen bei der Rückbewegung nicht mit dem Förderanschlag an dem Rohwerkstück hängenbleibt und blockiert. Während das Rohwerkstück in dem Schleifspalt durch spitzenloses Außenrundschleifen mit geometrisch unbestimmter Schneide zu dem Endwerkstück spanend bearbeitet wird, kann bereits das nächste Rohwerkstück in den Aufnahmerahmen hereinbefördert werden.

Die axiale Hin- und Herbewegung des Aufnahmerahmens kann sehr einfach realisiert werden und besonders schnell erfolgen, so dass das Einlegen des nächsten Rohwerkstücks kostengünstig und schnell erfolgen kann. Zudem kann das Herausbefördern des Endwerkstücks und das Einlegen des nächsten Rohwerkstücks gleichzeitig erfolgen, so dass sequentiell nachfolgende Tätigkeitsschritte für das Herausbefördern des Endwerkstücks und das Einlegen des nächsten Rohwerkstücks nicht erforderlich sind. Die Werkstückwechselzeit kann dadurch erheblich reduziert werden. Zudem kann auch das nächste Rohwerkstück bereits vorbereitet werden, während die Bearbeitung des in dem Schleifspalt eingelegten Rohwerkstücks zu dem Endwerkstück noch erfolgt. Dadurch kann ebenfalls die Werkstückwechselzeit reduziert werden, ohne dass hierfür ein weiteres unabhängiges Handhabungswerkzeug erforderlich ist. Insbesondere ist mit dem Aufnahmerahmen nur genau ein Handhabungswerkzeug vorgesehen, das gleichzeitig ein weiteres Rohwerkstück in den Schleifspalt einlegt und das fertige Endwerkstück aus dem Schleifspalt herausbefördert. Durch den sowohl für das Herausbefördern des Endwerkstücks und das Einlegen des Rohwerkstücks ausgestalteten Aufnahmerahmen kann die Werkstückwechselzeit erheblich reduziert werden, so dass eine hohe Stückzahl von mit Hilfe einer Einstechschleifmaschine herstellbaren Werkstücken ermöglicht ist.

Der Verlagerungsaktor kann beispielsweise einen in einem Zylinder geführten Kolben aufweisen, der insbesondere an einer vom Schleifspalt weg weisenden Stirnseite des Aufnahmerahmens befestigt ist. Vorzugsweise kann der Verlagerungsaktor den Aufnahmerahmen von sich weg drücken und auf sich zu ziehen, so dass beide Axialbewegungen des Aufnahmerahmens von dem Verlagerungsaktor durchgeführt werden können. Der Aufnahmerahmen kann an der vom Schleifspalt weg weisenden Stirnseite an dem Rohwerkstück angreifen, um das Rohwerkstück in den Schleifspalt zu drücken. Der Aufnahmerahmen kann hierbei im Wesentlichen parallel zur Axialrichtung verlaufende Seitenwände aufweisen, um ein Verkippen des Rohwerkstück quer zur Axialrichtung zu verhindern. Alternativ können die Seitenwände von dem Auflagekörper ausgebildet sein, zwischen denen eine axiale Seitenwand des Aufnahmerahmens geführt sein kann, um das Rohwerkstück axial zu verlagern. Der Aufnahmerahmen kann an der zum Schleifspalt weisen Seite eine Kante und/oder eine Stirnseite aufweisen, um den an dem Endwerkstück anschlagbaren Förderanschlag auszubilden. Bei der axialen Rückbewegung des Aufnahmerahmens kann vorgesehen sein, dass der Förderanschlag oberhalb des in dem Schleifspalt eingelegten Rohwerkstücks vorbeigeführt wird. Hierbei ist es möglich den gesamten Aufnahmerahmen anzuheben oder nur das den Förderanschlag ausbildende Bauteil oberhalb an dem in dem Schleifspalt eingelegten Rohwerkstück vorbeizubewegen. Das den Förderanschlag ausbildende Bauteil kann hierbei beweglich mit dem Aufnahmerahmen verbunden sein. Bei der Axialbewegung des Rohwerkstücks in den Schleifspalt hinein kann der Aufnahmerahmen beziehungsweise der Auflagekörper ein vertikales Höhenniveau aufweisen, bei dem das Rohwerkstück im Wesentlichen koaxial zu dem Endwerkstück positioniert ist. Vorzugsweise weist der Aufnahmerahmen beziehungsweise der Auflagekörper ein vertikales Höhenniveau auf, bei dem das das Rohwerkstück soweit oberhalb zum Endwerkstück positioniert ist, dass der Aufnahmerahmen ohne eine radiale Relativbewegung einer Schleifscheibe und/oder einer Regelscheibe der Einstechschleifmaschine ohne ein Anschlagen in dem Schleifspalt zwischen der Schleifscheibe und der Regelscheibe hineinreichen kann. Das Rohwerkstück kann hierbei eine geringe Höhe aus dem Aufnahmerahmen heraus an die designierte Stelle im Schleifspalt herunterfallen. Die Fallhöhe ist hierbei so gering, dass eine Beschädigung des Rohwerkstücks und/oder der Einstechschleifmaschine oder eine Fehlstellung des Rohwerkstücks in dem Schleifspalt nicht zu befürchten ist.

Insbesondere weist der Auflagekörper einen stirnseitigen zum Schleifspalt weisenden Axialanschlag zur axialen Positionierung des in dem Schleifspalt eingelegten Rohwerkstücks auf. Wenn das Rohwerkstück in dem Schleifspalt eingelegt ist, kann das Rohwerkstück in axialer Richtung gegen den Axialanschlag des Auflagekörpers bewegt werden. Dadurch ergibt sich eine genau definierte axiale Relativlage des Rohwerkstücks im Schleifspalt. Ein axiales Überstehen des Rohwerkstück über den Bereich der Schleifscheibe hinaus kann dadurch vermieden oder zumindest minimiert werden. Dadurch kann ein Abstechen eines axialen Überstands am Endwerkstück vermieden werden. Der werkstückseitige Materialeinsatz kann dadurch gering gehalten werden. Insbesondere kann für der Axialanschlag ein sowieso vorgesehenes Bauteil funktionalisiert werden, so dass die Bauteileanzahl gering gehalten werden kann.

Erfindungsgemäß weist der Aufnahmerahmen einen Positionieranschlag zum axialen Anschlagen an einer von dem Auflagekörper weg weisenden Axialseite des Rohwerkstücks auf. Dadurch kann der Aufnahmerahmen bei der Rückbewegung in die Ausgangsposition mit dem Positionieranschlag an einer Axialseite des Rohwerkstücks anschlagen, insbesondere wenn das Rohwerkstück in dem Schleifspalt zur Bearbeitung eingelegt ist, und in eine definierte axiale Relativlage bewegen. Besonders bevorzugt kann der Positionieranschlag das Rohwerkstück gegen den Axialanschlag des Auflagekörpers drücken. Insbesondere kann für der Positionieranschlag ein sowieso vorgesehenes Bauteil funktionalisiert werden, so dass die Bauteileanzahl gering gehalten werden kann.

Der Aufnahmerahmen weist zudem erfindungsgemäß an einer zum Schleifspalt weisenden Axialseite eine, insbesondere federbelastete, Klappe auf, wobei die Klappe an der vom Schleifspalt weg weisenden Seite den Positionieranschlag aufweist. Wenn auf den Positionieranschlag eine hinreichend große Widerstandskraft aufgeprägt wird, beispielsweise weil das Rohwerkstück an dem Auflagekörper anschlägt, kann die Klappe zusammen mit dem Positionieranschlag durch eine Schwenkbewegung ausweichen und an dem Rohwerkstück verbeigeführt werden. Vorzugsweise ist die Klappe, beispielsweise mit Hilfe einer Schenkelfeder, mit einer Federkraft vorgespannt, so dass die Klappe das Rohwerkstück verschieben kann ohne weg zu schwenken und erst dann eine Schwenkbewegung ausführt, wenn das Rohwerkstück in der gewünschten Axialrelativlage des Rohwerkstücks eine entsprechend höhere Widerstandskraft bereitstellt.

Insbesondere ist die Klappe in Schwerkraftrichtung oberhalb des in dem Schleifspalt angeordneten Rohwerkstücks und/oder am oberen Rand des Aufnahmerahmens um eine im Wesentlichen senkrecht zu einer Axialachse des Rohwerkstücks schwenkbar angelenkt. Die Klappe kann dadurch weit genug nach unten abstehen, um mit dem Positionieranschlag an dem Rohwerkstück axial anschlagen zu können, ist aber gleichzeitig soweit oben angelenkt, dass die Klappe in der gewünschten Axialrelativlage des Rohwerkstücks wegschwenken und an dem Rohwerkstück vorbei bewegt werden kann.

Vorzugsweise bildet die Klappe an der zum Schleifspalt weisenden Seite den Förderanschlag aus, wobei insbesondere die Klappe an der vom Schleifspalt weg weisenden Seite an dem übrigen Aufnahmerahmen anschlagbar ist. Dadurch ergibt sich ein platzsparender Aufbau, um einerseits das Endwerkstück weg zu befördern und das Rohwerkstück einzulegen. Insbesondere kann die Klappe bei einem Anschlagen an dem Endwerkstück gegen eine Seitenkante von Seitenwänden des Aufnahmerahmens gedrückt werden, wodurch sich eine Versteifung ergibt, die leicht ein Fördern des Endwerkstücks aus dem Schleifspalt ermöglicht. Insbesondere kann das Endwerkstück eine unregelmäßige Außenkontur mit Stufen, Absätze und Vertiefungen aufweisen, so dass auch bei signifikanten Widerstandskräften gegen eine axiale Verlagerung des Endwerkstücks der Förderanschlag der Klappe das Endwerkstück aus dem Schleifspalt befördern kann.

Die Erfindung betrifft ferner eine Einstechschleifmaschine zum spitzenlosen Außenrundschleifen mit einer Schleifscheibe, einer über einen Schleifspalt zu der Schleifscheibe radial beabstandeten Regelscheibe und einer Beladungseinrichtung, die wie vorstehend beschrieben aus- und weitergebildet ist, zum Beladen eines Rohwerkstücks in den Schleifspalt und zum, insbesondere gleichzeitigen, Entfernen eines Endwerkstücks aus dem Schleifspalt. Durch den sowohl für das Herausbefördern des Endwerkstücks und das Einlegen des Rohwerkstücks ausgestalteten Aufnahmerahmen kann die Werkstückwechselzeit erheblich reduziert werden, so dass eine hohe Stückzahl von mit Hilfe einer Einstechschleifmaschine herstellbaren Werkstücken ermöglicht ist.

Insbesondere schließt sich in einer von dem Auflagekörper der Beladungseinrichtung weg weisenden axialen Richtung ein Förderelement an dem Schleifspalt an, wobei insbesondere das Förderelement für eine schwerkraftunterstütze Förderung des Endwerkstücks von dem Schleifspalt weg, insbesondere rampenförmig, ausgestaltet ist. Das Endwerkstück kann beispielsweise an dem als Rampe ausgestalteten Förderelement herunterrutschen. Es ist auch möglich das Förderelement als Förderband oder ähnliches auszugestalten, um das Endwerkstück von der Einstechschleifmaschine weg zu bewegen und Platz für das nächste Endwerkstück zu schaffen.

Die Erfindung betrifft ferner ein Verfahren zum spitzenlosen Außenrundschleifen, insbesondere mit Hilfe einer Einstechschleifmaschine, die wie vorstehend beschrieben aus- und weitergebildet sein kann, bei dem ein Rohwerkstück in einen Aufnahmerahmen einer Beladungseinrichtung, die wie vorstehend beschrieben aus- und weitergebildet sein kann, eingelegt und auf dem Auflagekörper abgesetzt wird, nachfolgend der Aufnahmerahmen in axialer Richtung von dem Auflagekörper herunter bewegt wird, wobei der Aufnahmerahmen während der axialen Bewegung ein in einem Schleifspalt einer Einstechschleifmaschine positioniertes Endwerkstück axial aus dem Schleifspalt fördert, das in dem Aufnahmerahmen eingelegte Rohwerkstück schwerkraftbedingt in den Schleifspalt gelangt, nachfolgend der Aufnahmerahmen in axialer Richtung zurück auf den Auflagekörper bewegt wird und nachfolgend ein weiteres Rohwerkstück in den Aufnahmerahmen eingelegt und auf dem Auflagekörper abgesetzt wird, während das im Schleifspalt positionierte Rohwerkstück zur Herstellung des Endwerkstücks bearbeitet wird. Das Verfahren kann wie vorstehend anhand der Beladungseinrichtung und/oder der Einstechschleifmaschine beschrieben aus- und weitergebildet sein. Durch den sowohl für das Herausbefördern des Endwerkstücks und das Einlegen des Rohwerkstücks ausgestalteten Aufnahmerahmen kann die Werkstückwechselzeit erheblich reduziert werden, so dass eine hohe Stückzahl von mit Hilfe einer Einstechschleifmaschine herstellbaren Werkstücken ermöglicht ist.

Insbesondere ist vorgesehen, dass während der axialen Rückbewegung des Aufnahmerahmens auf den Auflagekörper der Aufnahmerahmen das in dem Schleifspalt eingelegte Rohwerkstück an den Auflagekörper axial heranschiebt. Dadurch ergibt sich eine genau definierte axiale Relativlage des Rohwerkstücks im Schleifspalt. Ein axiales Überstehen des Rohwerkstück über den Bereich der Schleifscheibe hinaus kann dadurch vermieden oder zumindest minimiert werden. Dadurch kann ein Abstechen eines axialen Überstands am Endwerkstück vermieden werden. Der werkstückseitige Materialeinsatz kann dadurch gering gehalten werden. Insbesondere kann für der Axialanschlag ein sowieso vorgesehenes Bauteil funktionalisiert werden, so dass die Bauteileanzahl gering gehalten werden kann.

Nachfolgend wird die Erfindung unter Bezugnahme auf die anliegenden Zeichnungen anhand bevorzugter Ausführungsbeispiele exemplarisch erläutert.

Es zeigen:
Fig. 1: eine schematische perspektivische Ansicht einer Beladungseinrichtung für eine Einstechschleifmaschine,
Fig. 2: eine schematische Schnittansicht der Beladungseinrichtung aus Fig. 1 zu einem ersten Zeitpunkt,
Fig. 3: eine schematische Schnittansicht der Beladungseinrichtung aus Fig. 1 zu einem zweiten Zeitpunkt,
Fig. 4: eine schematische Schnittansicht der Beladungseinrichtung aus Fig. 1 zu einem dritten Zeitpunkt,
Fig. 5: eine schematische Schnittansicht der Beladungseinrichtung aus Fig. 1 zu einem vierten Zeitpunkt,
Fig. 6: eine schematische Schnittansicht der Beladungseinrichtung aus Fig. 1 zu einem fünften Zeitpunkt,
Fig. 7: eine schematische Schnittansicht der Beladungseinrichtung aus Fig. 1 zu einem sechsten Zeitpunkt und
Fig. 8: eine schematische Schnittansicht der Beladungseinrichtung aus Fig. 1 zu einem siebenten Zeitpunkt.

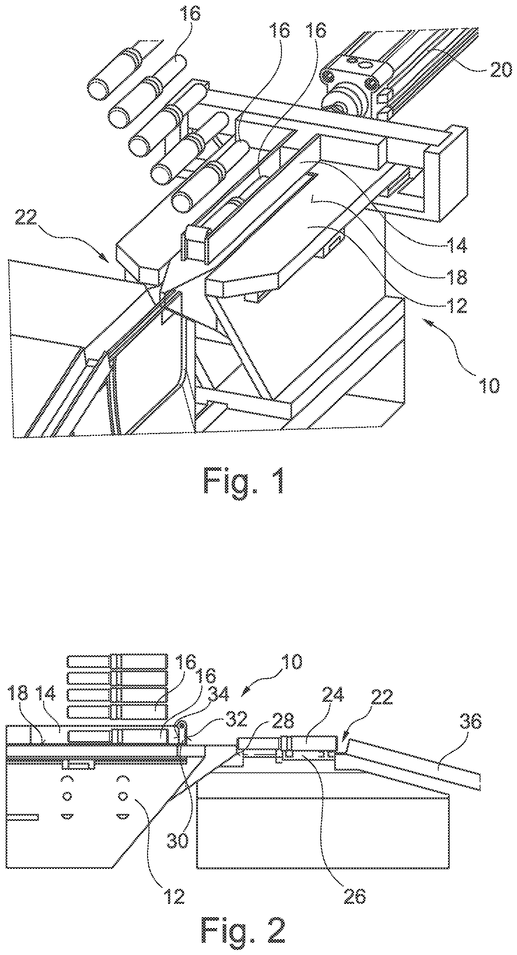

Die in Fig. 1 dargestellte Beladungseinrichtung 10 für eine Einstechschleifmaschine weist einen Auflagekörper 12 auf, auf dem ein Aufnahmerahmen 14 abgestellt ist. In der dargestellten Ausgangsposition des Aufnahmerahmens 14 kann ein zu schleifendes Rohwerkstück 16 in den Aufnahmerahmen 14 beispielsweise mit Hilfe einer mit mehreren Rohwerkstücken 16 beladenen Vereinzelungseinrichtung eingelegt werden. Das Rohwerkstück 16 kann in dem nach unten und nach oben geöffneten Aufnahmerahmen 14 auf einem nach oben weisenden Auflageboden 18 des Auflagekörpers 12 aufgelegt werden. Mit dem Aufnahmerahmen 14 ist ein als beispielsweise hydraulisch betriebene Kolben/Zylinder-Einheit ausgestalteter Verlagerungsaktor 20 fest verbunden, der den Aufnahmerahmen 14 parallel zum Auflageboden 18 in axialer Richtung in einen Schleifspalt 22 zwischen einer aus Gründen der besseren Übersichtlichkeit nicht dargestellten profilierten Schleifscheibe und einer nicht dargestellten profilierten Regelscheibe der Einstechschleifmaschine und zurück in die Ausgangsposition bewegen kann.

Wie in Fig. 2 dargestellt kann zu dem Zeitpunkt, zu dem das Rohwerkstück 16 in den Aufnahmerahmen 14 eingelegt wird, in dem Schleifspalt 22 der Einstechschleifmaschine ein Endwerkstück 24 gefertigt werden. Das Endwerkstück 24 kann auf einer Halteschiene 26 in vertikaler Richtung definiert positioniert sein. Zudem kann das Endwerkstück 24 an einem Axialanschlag 28 des Auflagekörpers 12 anliegen, so dass auch die axiale Relativlage in dem Schleifspalt 22 definiert vorgegeben werden kann. An einer zum Schleifspalt 22 weisenden Stirnseite des Aufnahmerahmens 14 ist am oberen Ende des Aufnahmerahmens 14 eine, insbesondere mit Hilfe einer Feder in den dargestellten geschlossenen Zustand vorgespannte, Klappe 30 angelenkt. Die Klappe 30 bildet an der zum Schleifspalt 22 weisenden Seite einen Förderanschlag 32 und an der vom Schleifspalt 22 weg weisenden entgegen gesetzten Seite einen Positionieranschlag 34 aus.

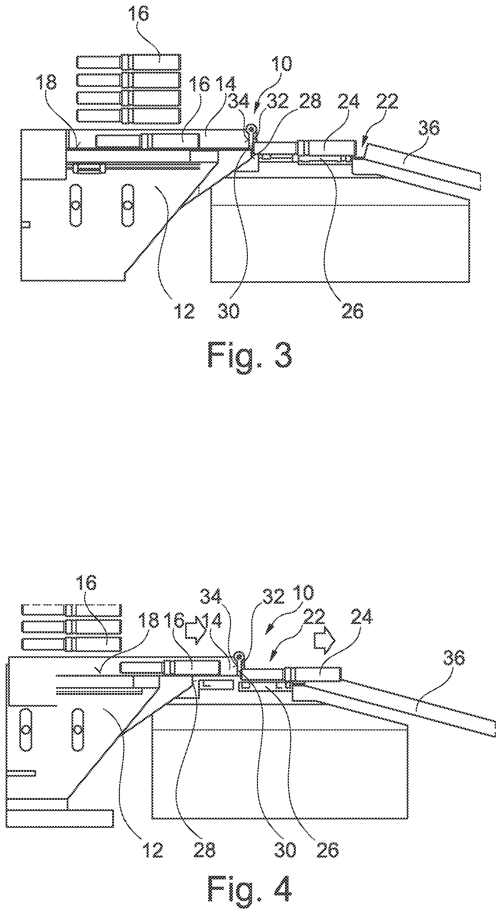

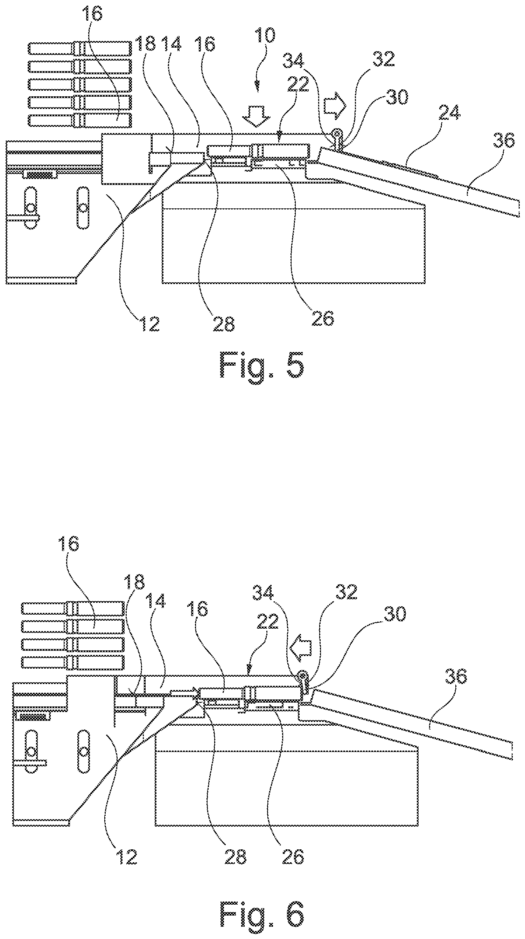

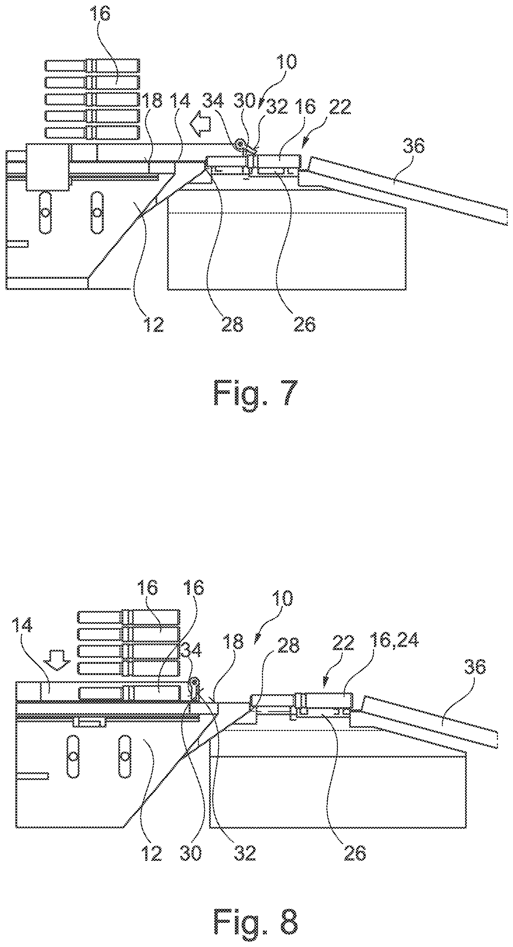

Wie in Fig. 3 dargestellt kann der Aufnahmerahmen 14 mit dem Förderanschlag 32 der Klappe 30 an dem oberen Teil des Endwerkstücks 24 axial anschlagen, wenn der Verlagerungsaktor 20 den Aufnahmerahmen 14 in Richtung des Schleifspalts 22 ausfährt. Das Endwerkstück 24 kann dadurch von dem Axialanschlag 28 des Auflagekörpers 12 weggeschoben und in ein axial gegenüberliegendes, beispielsweise als Rampe ausgestaltetes, Förderelement 36 gefördert werden, wie in Fig. 4 dargestellt. Wenn der Aufnahmerahmen 14 seine in dem Schleifspalt 22 vorgesehene Endposition erreicht hat, wie in Fig. 5 dargestellt, ist das Endwerkstück 24 vollständig aus dem Schleifspalt 22 herausgelangt. Das Rohwerkstück 16 kann aus dem Aufnahmerahmen 14 nach unten herausfallen und innerhalb des Schleifspalts 22 von der Halteschiene 26 aufgenommen werden. Wenn der Aufnahmerahmen 14 zurück in die Ausgangsposition bewegt wird, wie in Fig. 6 dargestellt, kann der Positionieranschlag 34 der insbesondere federbelasteten Klappe 30 an dem Rohwerkstück 16 anschlagen und das Rohwerkstück 16 gegen den Axialanschlag 28 des Auflagekörpers 12 drücken. Bei einer weiteren Axialbewegung des Aufnahmerahmens 14, wie in Fig. 7 dargestellt, kann die Klappe 30 wegklappen, so dass die Klappe 30 und der Positionieranschlag 34 an dem positionierten Rohwerkstück 16 vorbeigeführt werden können ohne hierfür den gesamten Aufnahmerahmen 14 anheben zu müssen. Schließlich erreicht der Aufnahmerahmen wieder die in Fig. 8 dargestellte Ausgangsposition und kann mit einem weiteren Rohwerkstück 16 beladen werden, während das im Schleifspalt 22 positionierte Rohwerkstück 16 zu dem Endwerkstück 24 gefertigt werden kann.

### Bezugszeichenliste

- 10: Beladungseinrichtung
- 12: Auflagekörper
- 14: Aufnahmerahmen
- 16: Rohwerkstück
- 18: Auflageboden
- 20: Verlagerungsaktor
- 22: Schleifspalt
- 24: Endwerkstück
- 26: Halteschiene
- 28: Axialanschlag
- 30: Klappe
- 32: Förderanschlag
- 34: Positionieranschlag
- 36: Förderelement

## Patentansprüche

1. Beladungseinrichtung für eine Einstechschleifmaschine zum spitzenlosen Außenrundschleifen, mit
einem Aufnahmerahmen (14) zur Aufnahme eines zu bearbeitenden Rohwerkstücks (16), wobei der Aufnahmerahmen (14) in Schwerkraftrichtung geöffnet ausgestaltet ist, einem Auflagekörper (12) zur Ausbildung eines Auflagebodens (18) für das in dem Aufnahmerahmen (14) aufgenommene Rohwerkstück (16) und
einem an dem Aufnahmerahmen (14) angreifenden Verlagerungsaktor (20) zum axialen Verlagern des Aufnahmerahmens (14) relativ zum Auflagekörper (12) in einen Schleifspalt (22) der Einstechschleifmaschine, wo der Aufnahmerahmen (14) zu dem Auflagekörper (14) versetzt positioniert ist,
wobei der Aufnahmerahmen (14) an einer in axialer Richtung weisenden Stirnseite einen Förderanschlag (32) zum axialen Herausbefördern eines in dem Schleifspalt (22) angeordneten Endwerkstücks (24) aufweist, wobei der Aufnahmerahmen (14) einen Positionieranschlag (34) zum axialen Anschlagen an einer von dem Auflagekörper (12) weg weisenden Axialseite des Rohwerkstücks (16) aufweist,
**dadurch gekennzeichnet, dass** der Aufnahmerahmen (14) an einer zum Schleifspalt (22) weisenden Axialseite eine Klappe (30) aufweist, wobei die Klappe (30) an der vom Schleifspalt (22) weg weisenden Seite den Positionieranschlag (34) aufweist.

2. Beladungseinrichtung nach Anspruch 1 **dadurch gekennzeichnet, dass** der Auflagekörper (12) einen stirnseitigen zum Schleifspalt (22) weisenden Axialanschlag (28) zur axialen Positionierung des in dem Schleifspalt (22) eingelegten Rohwerkstücks (16) aufweist.

3. Beladungseinrichtung nach Anspruch 1 oder 2, **dadurch gekennzeichnet, dass** der Aufnahmerahmen (14) an der zum Schleifspalt (22) weisenden Axialseite eine federbelastete Klappe (30) aufweist, wobei die Klappe (30) an der vom Schleifspalt (22) weg weisenden Seite den Positionieranschlag (34) aufweist.

4. Beladungseinrichtung nach einem der Ansprüche 1 bis 3, **dadurch gekennzeichnet, dass** die Klappe (30) in Schwerkraftrichtung oberhalb des in dem Schleifspalt (22) angeordneten Rohwerkstücks (16) und/oder am oberen Rand des Aufnahmerahmens (14) um eine im Wesentlichen senkrecht zu einer Axialachse des Rohwerkstücks (16) schwenkbar angelenkt ist.

5. Beladungseinrichtung nach einem der Ansprüche 1 bis 4, **dadurch gekennzeichnet, dass** die Klappe (30) an der zum Schleifspalt (22) weisenden Seite den Förderanschlag (32) ausbildet, wobei die Klappe (30) an der vom Schleifspalt (22) weg weisenden Seite an dem übrigen Aufnahmerahmen (14) anschlagbar ist.

6. Einstechschleifmaschine zum spitzenlosen Außenrundschleifen mit einer Schleifscheibe, einer über einen Schleifspalt (22) zu der Schleifscheibe radial beabstandeten Regelscheibe und einer Beladungseinrichtung (10) nach einem der Ansprüche 1 bis 5 zum Beladen eines Rohwerkstücks (16) in den Schleifspalt (22) und zum Entfernen eines Endwerkstücks (24) aus dem Schleifspalt (22).

7. Einstechschleifmaschine nach Anspruch 6, **dadurch gekennzeichnet, dass** sich in einer von dem Auflagekörper (12) der Beladungseinrichtung (10) weg weisenden axialen Richtung ein Förderelement (36) an dem Schleifspalt (22) anschließt.

8. Einstechschleifmaschine nach Anspruch 7, **dadurch gekennzeichnet, dass** sich in der von dem Auflagekörper (12) der Beladungseinrichtung (10) weg weisenden axialen Richtung das Förderelement (36) an dem Schleifspalt (22) anschließt, wobei das Förderelement (36) für eine schwerkraftunterstütze Förderung des Endwerkstücks (24) von dem Schleifspalt (22) weg rampenförmig ausgestaltet ist.

9. Verfahren zum spitzenlosen Außenrundschleifen, mit Hilfe einer Beladungseinrichtung nach einem der Ansprüche 1 bis 5 und insbesondere mit Hilfe einer Einstechschleifmaschine nach Anspruch 6, 7 oder 8, bei dem
ein Rohwerkstück (16) in den Aufnahmerahmen (14) der Beladungseinrichtung (10') eingelegt und auf dem Auflagekörper (12) abgesetzt wird,
nachfolgend der Aufnahmerahmen (14) in axialer Richtung von dem Auflagekörper (12) herunter bewegt wird, wobei der Aufnahmerahmen (14) während der axialen Bewegung ein in einem Schleifspalt (22) einer Einstechschleifmaschine positioniertes Endwerkstück (24) axial aus dem Schleifspalt (22) fördert,
das in dem Aufnahmerahmen (14) eingelegte Rohwerkstück (16) schwerkraftbedingt in den Schleifspalt (22) gelangt,
nachfolgend der Aufnahmerahmen (14) in axialer Richtung zurück auf den Auflagekörper (12) bewegt wird und
nachfolgend ein weiteres Rohwerkstück (16) in den Aufnahmerahmen (14) eingelegt und auf dem Auflagekörper abgesetzt wird, während das im Schleifspalt (22) positionierte Rohwerkstück (16) zur Herstellung des Endwerkstücks (24) bearbeitet wird.

10. Verfahren nach Anspruch 9, bei dem während der axialen Rückbewegung des Aufnahmerahmens (14) auf den Auflagekörper (12) der Aufnahmerahmen (14) das in dem Schleifspalt (22) eingelegte Rohwerkstück (16) an den Auflagekörper (12) axial heranschiebt.

## Claims

1. A loading device for a plunge cut grinding machine for centreless external cylindrical grinding, having
a receiving frame (14) for receiving a raw workpiece (16) to be machined, wherein the receiving frame (14) is designed to be open in the direction of gravity, a support body (12) for forming a support base (18) for the raw workpiece (16) received in the receiving frame (14), and
a displacement actuator (20) engaging the receiving frame (14) for axially displacing the receiving frame (14) relative to the support body (12) into a grinding gap (22) of the plunge cut grinding machine, where the receiving frame (14) is positioned offset to the support body (14), wherein the receiving frame (14) has a conveying stop (32) on an end face pointing in the axial direction for axially conveying out a final workpiece (24) arranged in the grinding gap (22), wherein the receiving frame (14) has a positioning stop (34) for axially striking against an axial side of the raw workpiece (16) facing away from the support body (12),
**characterised in that** the receiving frame (14) has a flap (30) on an axial side facing the grinding gap (22), wherein the flap (30) has the positioning stop (34) on the side facing away from the grinding gap (22).

2. The loading device according to claim 1, **characterised in that** the support body (12) has an axial stop (28) on the end face facing the grinding gap (22) for axial positioning of the raw workpiece (16) inserted in the grinding gap (22).

3. The loading device according to claim 1 or 2, **characterised in that** the receiving frame (14) has a spring-loaded flap (30) on the axial side facing the grinding gap (22), wherein the flap (30) has the positioning stop (34) on the side facing away from the grinding gap (22).

4. The loading device according to any one of claims 1 to 3, **characterised in that** the flap (30) is hinged in the direction of gravity above the raw workpiece (16) arranged in the grinding gap (22) and/or at the upper edge of the receiving frame (14) so as to be pivotable about an axis substantially perpendicular to an axial axis of the raw workpiece (16).

5. The loading device according to any one of claims 1 to 4, **characterised in that** the flap (30) forms the conveying stop (32) on the side facing the grinding gap (22), wherein the flap (30) can strike against the remaining receiving frame (14) on the side facing away from the grinding gap (22).

6. A plunge cut grinding machine for centreless external cylindrical grinding having a grinding wheel, a regulating wheel radially spaced apart from the grinding wheel by a grinding gap (22), and a loading device (10) according to any one of claims 1 to 5 for loading a raw workpiece (16) into the grinding gap (22) and removing a final workpiece (24) from the grinding gap (22).

7. The plunge cut grinding machine according to claim 6, **characterised in that** a conveying element (36) adjoins the grinding gap (22) in an axial direction pointing away from the support body (12) of the loading device (10).

8. The plunge cut grinding machine according to claim 7, **characterised in that** the conveying element (36) adjoins the grinding gap (22) in the axial direction pointing away from the support body (12) of the loading device (10), wherein the conveying element (36) is designed to be ramp-shaped for gravity-assisted conveying of the final workpiece (24) away from the grinding gap (22).

9. A method for centreless external cylindrical grinding, with the aid of a loading device according to any one of claims 1 to 5 and in particular with the aid of a plunge cut grinding machine according to claim 6, 7 or 8, in which a raw workpiece (16) is inserted into the receiving frame (14) of the loading device (10') and placed on the support body (12), subsequently, the receiving frame (14) is moved down in the axial direction from the support body (12), wherein the receiving frame (14) conveys a final workpiece (24) positioned in a grinding gap (22) of a plunge cut grinding machine axially out of the grinding gap (22) during the axial movement,
the raw workpiece (16) inserted in the receiving frame (14) enters the grinding gap (22) under the force of gravity,
subsequently, the receiving frame (14) is moved back onto the supporting body (12) in the axial direction, and
subsequently, a further raw workpiece (16) is inserted into the receiving frame (14) and placed on the support body, while the raw workpiece (16) positioned in the grinding gap (22) is machined to produce the final workpiece (24).

10. The method according to claim 9, wherein during the axial return movement of the receiving frame (14) onto the support body (12), the receiving frame (14) axially pushes the raw workpiece (16) inserted in the grinding gap (22) toward the support body (12).

## Revendications

1. Dispositif de chargement pour une machine de rectification en plongée pour la rectification cylindrique externe sans pointe, comportant
un cadre de réception (14) destiné à la réception d'une pièce brute (16) à usiner, le cadre de réception (14) étant conçu ouvert dans la direction de la gravité, un corps d'appui (12) destiné à la formation d'une base d'appui (18) pour la pièce brute (16) reçue dans le cadre de réception (14) et
un actionneur de déplacement (20) venant en prise avec le cadre de réception (14) destiné au déplacement axial du cadre de réception (14) par rapport au corps d'appui (12) dans une fente de rectification (22) de la machine de rectification en plongée, où le cadre de réception (14) est positionné décalé par rapport au corps d'appui (14),
le cadre de réception (14) comportant, sur une face frontale tournée dans la direction axiale, une butée de transport (32) permettant de transporter de manière axiale une pièce finie (24) disposée dans la fente de rectification (22), le cadre de réception (14) comportant une butée de positionnement (34) permettant de venir en butée de manière axiale sur un côté axial de la pièce brute (16) tourné à l'opposé du corps d'appui (12),
**caractérisé en ce que** le cadre de réception (14) comporte, sur un côté axial orienté vers la fente de rectification (22), un volet (30), le volet (30) comportant, sur le côté tourné à l'opposé de la fente de rectification (22), la butée de positionnement (34).

2. Dispositif de chargement selon la revendication 1, **caractérisé en ce que** le corps d'appui (12) comporte une butée axiale (28) frontale tournée vers la fente de rectification (22) destinée au positionnement axial de la pièce brute (16) introduite dans la fente de rectification (22).

3. Dispositif de chargement selon la revendication 1 ou 2, **caractérisé en ce que** le cadre de réception (14) comporte, sur le côté axial tourné vers la fente de rectification (22), un volet (30) sollicité par ressort, le volet (30) comportant, sur le côté tourné à l'opposé de la fente de rectification (22), la butée de positionnement (34).

4. Dispositif de chargement selon l'une quelconque des revendications 1 à 3, **caractérisé en ce que** le volet (30) est articulé de manière à pivoter, dans la direction de la gravité au-dessus de la pièce brute (16) disposée dans la fente de rectification (22) et/ou sur le bord supérieur du cadre de réception (14), autour d'un axe sensiblement perpendiculaire à un axe axial de la pièce brute (16).

5. Dispositif de chargement selon l'une quelconque des revendications 1 à 4, **caractérisé en ce que** le volet (30) forme, sur le côté tourné vers la fente de rectification (22), la butée de transport (32), le volet (30) pouvant venir en butée, sur le côté tourné à l'opposé de la fente de rectification (22), contre le reste du cadre de réception (14).

6. Machine de rectification en plongée pour la rectification cylindrique externe sans pointe à l'aide d'un disque à rectifier, d'un disque à régler espacé de manière radiale du disque à rectifier par une fente de rectification (22) et d'un dispositif de chargement (10) selon l'une quelconque des revendications 1 à 5 permettant de charger une pièce brute (16) dans la fente de rectification (22) et de retirer une pièce finie (24) de la fente de rectification (22).

7. Machine de rectification en plongée selon la revendication 6, **caractérisée en ce que**, dans une direction axiale s'éloignant du corps d'appui (12) du dispositif de chargement (10), un élément de transport (36) se raccorde à la fente de rectification (22).

8. Machine de rectification en plongée selon la revendication 7, **caractérisée en ce que**, dans une direction axiale s'éloignant du corps d'appui (12) du dispositif de chargement (10), l'élément de transport (36) se raccorde à la fente de rectification (22), l'élément de transport (36) étant conçu sous la forme d'une rampe pour transporter de manière assistée par gravité la pièce finie (24) à l'écart de la fente de rectification (22).

9. Procédé pour la rectification cylindrique externe sans pointe, à l'aide d'un dispositif de chargement selon l'une quelconque des revendications 1 à 5 et, en particulier à l'aide d'une machine de rectification en plongée selon la revendication 6, 7 ou 8, dans lequel une pièce brute (16) est introduite dans le cadre de réception (14) du dispositif de chargement (10') et placée sur le corps d'appui (12),
ensuite, le cadre de réception (14) est déplacé dans la direction axiale à l'opposé du corps d'appui (12), le cadre de réception (14), lors du déplacement axial, transportant de manière axiale une pièce finie (24), positionnée dans une fente de rectification (22) d'une machine de rectification en plongée, hors de la fente de rectification (22),
la pièce brute (16) introduite dans le cadre de réception (14) atteint la fente de rectification (22) sous l'effet de la gravité,
ensuite, le cadre de réception (14) est redéplacé dans la direction axiale sur le corps d'appui (12) et
ensuite, une autre pièce brute (16) est introduite dans le cadre de réception (14) et placée sur le corps d'appui, tandis que la pièce brute (16) positionnée dans la fente de rectification (22) est usinée pour fabriquer la pièce finie (24).

10. Procédé selon la revendication 9, dans lequel, lors du mouvement de retour axial du cadre de réception (14) sur le corps d'appui (12) du cadre de maintien (14), la pièce brute (16) introduite dans la fente de rectification (22) glisse de manière axiale sur le corps d'appui (12).
